# EUROPEAN PATENT APPLICATION

(11) **EP 3 354 141 A1**
(43) Date of publication of application: **01.08.2018**
(21) Application number: 17153088.4
(22) Date of filing: 25.01.2017
(51) Int. Cl.: A23L 29/256, A23L 29/269, A23L 19/00, A23L 19/12

(54) **METHOD FOR PRODUCING CROQUETTES**

(71) Applicant: de Jaeger, Maurice, 8300 Knokke (BE)
(72) Inventor: de Jaeger, Maurice, 8300 Knokke (BE)
(74) Representative: V.O.

(57) **Abstract**

The present invention relates to a method for producing an edible vegetable croquette, wherein a vegetable mass is shaped into a croquette, after which a shaped form of a solidified liquid flavor mass is inserted into the vegetable mass under pressure and an insertion opening along which the solidified flavor product has been inserted, is closed.

## Description

The present invention relates to according to the preamble of the first claim.

For years, the consumer has been used to separately purchase, store, handle and prepare food products such as sausages, potatoes on the one hand and high-moisture toppings such as a sauce on the other hand to go with it, and to combine the two only shortly prior to consumption. Over the years shaped food products combining different types of foods within one product became commercially available, for example a sausage or wiener or hot dog having a cheese ribbon or multiple cheese portions incorporated therein. These products are usually prepared by co-extrusion of the sausage emulsion and a flowable cheese composition. In another example a flavor composition is spread into a longitudinal, radial or spiral slit formed along the outer surface or skin of a formed sausage. Flavor components may also be incorporated directly into the batter or emulsion from which the sausage is prepared, or be injected into finished food products, typically as a liquid component. These latter types of approaches however have the effect that the liquid risks to spread over the food product and that the taste experience is nothing more than that of a blended flavor and is far removed from the experience of for example, a separate sausage flavor and a separate sauce flavor, typical for co-extruded products.
CA02254698 discloses a shaped food product formed from a protein-containing set-up batter, for example a batter comprising ground meat or ground seafood. Discrete flavored stabilized gel pieces are dispersed within the set-up batter, in the form of for example non-liquid chunks, cubes, dices, coarse grinds and the like. The gel pieces will generally contain between 4 and 15 wt. % of gelatin, at least 30 wt. % of water, and one or more flavoring components for example barbecue sauces, pizza sauces, marinara sauces, vinaigrette dressing, gravies etc. When mixing the gel pieces with the protein batter the protein batter is heated, as a result of which internal pockets filled with the flavoring component pieces are formed in the batter. Upon heating of the food product for consumption, the gel pieces get liquefied in the internal pockets.
GB2533693 discloses a Frankfurter sausage comprising an elongated body of edible meat product having small spherical pearls of at least one additional ingredient such as mustard or tomato ketchup dispersed in its interior. The exterior wall of each pearl may be made of a material different to the ingredient inside the pearl and may be a polymeric food material such as gelatin, pectin, carrageenan, agar or a mixture of these and may include an additive with a calcium salt base. The encapsulation prevents the pearls from breaking and losing the desired texture and flavor before consumption. The pearls are then incorporated into the meat mass. Upon cooking the sausage to make it ready for consumption, the interior ingredient of the pearls adopts a liquid state.

The sausages described above are usually contained and heated or cooked in an edible skin, which holds the edible mass together and prevents the sauce from running out of the sausage when heated or cooked, as long as the sausage is not consumed.

Many food products other than sausages which may be consumed together with a sauce or other liquid flavor component, are or can however not be consumed or cooked in a skin. Examples hereof are vegetable croquettes, in particular potato croquettes. These products can therefore not be cooked with a liquid flavor component as one single product. There is thus a need to a food products having as the main component one or more vegetables, in particular potatoes, which are associated with a flavor component and form a unitary food product therewith.

There is in particular a need for a unitary food product which combines a basic food product, for example as a minced vegetable based food product such as potato purée, and a low-viscosity flavor mass, for example a sauce, wherein the combination is such that the flavor of both the minced vegetable mass and the flavor mass can be appreciated.

The inventor has namely observed that a consumer who is enjoying a meal with a sauce and vegetables, and in particular potatoes, tends to eat the sauce together with the potatoes. Very often, a potato is crushed in the sauce not only in order to ensure complete consumption of all of the sauce but also to be able to better appreciate the taste of the sauce.

The inventor has also observed that upon the eating of vegetables, for example potatoes, with sauce usually an uneven distribution of the sauce over the vegetables and/or potatoes has to be taken into account. Therefore, upon serving care must be taken that the sauce is served over the entirety of the vegetables and/or potatoes. In addition, upon consumption of sauce covered vegetables or potatoes, in particular when crushing them together on the eating plate prior to eating, care must be taken to avoid slopping or messing of the sauce.

The present invention therefore seeks to solve the problem of providing a food product having one or more vegetables as the main component and containing in its interior at least one piece of a flavoring component which is meant to be liquid upon consumption.

The present invention in particular relates to a method for producing such a food product.

Thereto the present invention relates to a method for producing an edible vegetable croquette, wherein a vegetable mass is shaped into a croquette, after which a shaped form of a solidified liquid flavor mass is inserted into the vegetable mass under pressure at a desired position and an insertion opening along which the solidified flavor product has been inserted, is closed. In fact the flavor mass and the vegetable mass are combined into a single product which may be sold, stored and prepared as a single, complete entre.

Thereby, preferably use is made of a vegetable mass which comprises minced vegetables. Mincing of the vegetable mass may be achieved according to the techniques well known to the skilled person, for example by cooking of the vegetables, cooking under pressure or mincing or cutting the vegetables. The vegetable mass may either be prepared from raw vegetables, which are then cooked prior to consumption of the croquette, or the vegetable mass may be prepared from at least partially cooked vegetables, which are heated when preparing the croquette to make it ready for consumption.

Because a shaped form of a solidified liquid flavor mass is inserted into the vegetable mass under pressure only after the vegetable mass has been shaped into a croquette, the method of the present invention permits to position the solidified flavor mass into the croquette at a desired position which may be maintained in the course of a further processing of the vegetable mass, and to select the position of the flavor mass so as to provide an optimal taste perception. The position of the flavor mass may further be selected so as to permit optimal preparing of the croquette by heating to a cooking temperature and thereby achieve optimal heating and liquefying of the liquid components of the flavor mass, to achieve heating and cooking of the croquette and flavor mass which is as uniform as possible, as well as minimizing the risk to running of the flavor mass out of the croquette during cooking. The risk to running of the flavor mass out of the croquette during cooking is further minimized by ensuring that an opening in the vegetable mass formed by insertion of the solidified flavor mass or an opening formed in the vegetable mass to permit insertion of the solidified flavor mass, is closed.

To close the insertion opening, a vegetable mass may be used that is the same as the remainder of the croquette, or a different vegetable mass may be used as well. When closing, and when selecting the vegetable mass for closing the opening, the skilled person will take care that the mass fits well in the opening, is capable of adhering to the remainder of the vegetable mass and to form one integrated part therewith at minimum risk to the formation of cracks, ruptures, holes or any other opening along which the flavor mass when liquefied may run out of the vegetable mass.

The method of the present invention presents the advantage that it is suitable for use in highly automated production processes, as the flavor mass is inserted into the vegetable mass in the form of a solidified mass. The insertion of a solidified form of the flavor mass obviates the need to provide a corresponding recess for accommodating the flavor mass in the vegetable mass in advance of inserting it. The method of the present invention is suitable for use in highly automated production processes, also because insertion of the solidified flavor mass is carried out under pressure. This facilitates insertion of the flavor mass into the vegetable mass and contributes to obviating the need to provide a corresponding recess for accommodating the flavor mass in advance of its insertion into the vegetable mass.

Within the scope of the present invention "cooking" means preparing the croquette using heat to make it suitable for consumption, for example by baking or frying on a hot plate, grill or pan or in an oven or any other suitable way of baking, cooking in a cooking fluid such as fat, in particular frying in fat, more in particular deep frying in fat, or any other way considered suitable by the skilled person.

The method of the present invention is suitable for use with a wide variety of vegetable masses, in particular masses prepared from vegetables which are suitable for being cooked, minced or otherwise processed to provide a mass which is suitable for being shaped into a croquette. Examples of suitable vegetables include tuberous vegetables such as potatoes or turnips, cabbage type vegetables such as white, red or green cabbage, coli flower, broccoli etc. or root vegetables such as carrots, celery, parsnip, but also courgette, aubergine, pumpkin and any other vegetables considered suitable by the skilled person or mixtures of two or more of the afore-mentioned vegetables.

To produce a croquette, the vegetable may be cooked either fully or partially to result in a finely divided product or a cooked product in the form of a purée, the vegetable may be cooked and then minced, or the vegetable may be minced and then further used as such to produce the croquette for example by shaping the minced vegetable into a croquette under pressure in a mold. It is however also within the scope of this invention that the minced vegetable mass is mixed with a binding agent, for example egg, egg white, egg yolk, milk, fat, flower or any other binding agent considered suitable by the skilled person, to achieve good adhesion of the minced vegetable mass also in the course of cooking, in particular in the course of deep frying.

In a preferred embodiment, the vegetable mass may comprise a thickening agent, for example one or more thickening agents known to the skilled person such as xanthan and agar, in order to ensure good adhesion of the vegetable mass. A typical content of xanthan is between about 1 and 5 wt. % with respect to the v mass. A typical agar content is between about 1 and 5 wt. % with respect to the vegetable mass. A preferred embodiment of this invention namely relates to potato croquettes, made of a potato purée that has been prepared by incorporation of a binding agent, for example one or more of an egg yolk, milk, flower or any other binding agent or additional binding agent, and preferably also some fat into the potato purée.

Besides minced vegetable, the vegetable mass may contain one or more pieces, chunks or any otherwise shaped pieces of one or more vegetables which may the same as or different from the vegetables used to produce the vegetable mass. The vegetable mass may however also contain pieces, parts or chunks of meat, poultry, fish, scallops etc. if a more sophisticated croquette is envisaged.

Likewise, the method of the present invention is suitable for use with a wide variety of solidified liquid flavor masses, in particular liquid flavor masses which may be solidified either at room temperature, by heating to a solidification temperature or by cooling. Examples of suitable flavor masses include masses such as solidified water or fat based sauces, for example a meat or poultry broth or a sauce prepared from frying fat obtained from the preparation of poultry or meat, or a vegetable based broth or sauce, an extract, a condiment, a beverage, a syrup, a milk based sauce, mustard or ketchup or a mixture of two or more of the afore mentioned flavor masses, but more preferably the flavor mass is a smooth meat or poultry derived sauce. The solidified flavor mass may contain pieces of other ingredients which remain solid upon cooking, such as vegetables, fruit, nuts, meat or any other ingredients considered suitable by the skilled person. Examples of sauces suitable to be used in the flavor mass include tomato-based sauces, meat-based, fish-based, vegetable-based, oil-based, water-based sauces etc.

To achieve thickening of the flavor mass, a wide variety of thickening agents known to the skilled person may be used, but preferably the flavor mass is solidified using xanthan and agar, in order to ensure maximum flavor maintenance and good form stability and to minimize the risk that the flavor mass would mix with the vegetable mass in the course of cooking, before consumption. A typical content of xanthan is between about 1 and 5 wt. % with respect to the flavor mass. A typical agar content is between about 1 and 5 wt. % with respect to the flavor mass.

In a preferred embodiment of the invention, an external face of the croquette is covered or coated with a baking liquid, in particular a liquid batter or a dough, after the insertion opening has been closed. Thereby preferably the full circumferential external face of the croquette is coated therewith. This is done to minimize the risk to running out of the vegetable mass and the flavor mass into the cooking fluid when cooking the croquette. Within the scope of this invention a wide variety of baking liquids may be used, for example one or more selected from egg white or egg yolk or a mixture thereof. This layer will minimize the risk to running of the minced vegetable mass into the cooking fluid during cooking. On top of the baking liquid, preferably a further layer is applied of crumbs of a corn or bread.

To facilitate insertion of the solidified flavor mass into the vegetable mass and permit achieving a high degree of automation of croquette production, the solidified flavor mass is inserted into the vegetable mass as a frozen mass with a temperature of less than 0°C, preferably less than -5°C, more preferably less than -10°C, most preferably less than -15°C. A mass with such a temperature has a sufficient rigidity and shape retention to minimize the risk to deformation upon insertion into the vegetable mass.

Although in general this will not be necessary, insertion of the solidified flavor mass may be further facilitated by providing an elongated recess in an interior of the croquette for accommodating the flavor product, in advance of inserting the flavor product.

The solidified flavor mass may be inserted into the vegetable mass at any position within the interior of the vegetable mass, but preferably the flavor mass is positioned substantially central within the vegetable mass or within an interior of the croquette. Such positioning ensures that an optimal consistency of the vegetable mass can be maintained and that liquefying of the flavor mass can be optimally controlled.

The croquette may have any shape considered suitable by the skilled person. The croquette may for example be substantially cylindrical, beam shaped, ball shaped, egg shaped, pinecone shaped, cubic or any other shape or combination of shapes considered suitable by the skilled person.

Likewise, the solidified flavor mass may have any shape considered suitable by the skilled person, but preferably it has an elongated shape, more preferably a cylindrical shape. In a particularly preferred embodiment of this invention, the flavor mass is extruded in the form of a beam shaped or cylindrical or otherwise elongated rope or jejunum, which is cut into pieces of a desired length to fit in the vegetable mass croquettes. According to another embodiment, the rope of flavor mass may be inserted in a longitudinally extending rope or jejunum of vegetable mass with a length that corresponds to a plurality of croquettes, or the vegetable mass may be build around the flavor mass. After an elongated filled vegetable mass of long length has been produced, the filled vegetable mass is cut into pieces of croquettes of a desired length and the ends of the croquettes are closed.

The solidified flavor mass used to be inserted into the vegetable mass may have any shape and any dimensions considered suitable by the skilled person. Usually the dimensions of the shaped flavor mass will be smaller than those of the vegetable mass, to permit achieving full encapsulation. Depending on the relative dimensions of the solidified flavor mass in relation to the dimensions of the croquette, a croquette may contain one single piece of flavor mass, or two or more pieces thereof.

According to another preferred embodiment cooling of the flavor mass may be achieved by using a vegetable mass with a low temperature, for example a vegetable mass with a temperature of maximum 10°C, preferably maximum 5°C, more preferably maximum °C, most preferably maximum -5°C, in particular maximum -10°C. The use of a cooled vegetable mass permits to minimize the risk to re-heating and liquefying of the flavor mass, reduces the risk to a too early contamination or decay or reduction of the shelf life of the croquette, and presents the advantage that cooling of the croquette with the purpose of prolonging the shelf life may be accelerated. This is important particularly in automated industrial processes.

The mixture from which the flavor mass is prepared includes substantial quantities of one or more flavoring components. Flavoring masses typically include relatively high amounts of water. Typical water levels amount to at least 30 wt. % of the flavor mass, even between 50 and 95 wt. %, preferably above 75 wt. %.

In perhaps its simplest form, the product obtained with the method of this invention is shaped as a croquette having a traditionally general cylindrical shape with semi spherical or flat ends, and having one or more sausages of flavor mass incorporated therein.

The present invention is particularly suitable for producing food products which are heated or reheated and served warm. Upon consumption, the food product of this invention will generally comprise a hot minced vegetable mass, which encloses a liquid flavor mass.

The present invention also relates to an edible vegetable croquette, comprising a minced vegetable mass is shaped into a croquette which surrounds a shaped form of a solidified liquid flavor mass, wherein both opposite ends of the croquette are closed.

### Example.

A potato purée was prepared by cooking peeled potatoes, grinding the mass of the cooked potatoes and mixing it with a sufficient amount of milk, spices, fat, flower and eggs, to obtain a purée with a sufficient consistency and thickness. The puree was cooled, formed into traditional croquettes, which were stored at a temperature of about 10°C and left aside for further processing.

A flavor mass was prepared by mixing an extract of meat broth with xanthan and agar, the mass was cooled to a thick mass, cooled to a temperature of -5°C, shaped into a tow or rope of 1 cm diameter using extrusion and cut into pieces of the desired length.

The pieces of flavor mass where inserted into the pre-formed croquettes, along the circular end face of the croquettes. The opening formed at the insertion side of the croquette was then closed by application of an additional amount of potato purée.

The thus filled croquettes were dipped in liquid egg mass and in bread crumps. Care was taken to fully cover the exterior face of the croquette.

The thus obtained croquettes were stored at -22°C for a few days.

Prior to consumption, the croquettes were removed from the cooling, and cooked in deep frying fat at a temperature of 180°C.

A potato croquette was obtained, with a liquid sauce filling, which upon cutting of the potato ran out of the croquette and could be tasted together with the croquette.

It shall be clear to the skilled person that the preparation as described in the example above, is suitable for the preparation of other types of croquettes as well.

## Claims

1. A method for producing an edible vegetable croquette, wherein a vegetable mass is shaped into a croquette, after which a shaped form of a solidified liquid flavor mass is inserted into the vegetable mass under pressure and an insertion opening along which the solidified flavor product has been inserted in the vegetable mass, is closed.

2. A method according to claim 1, wherein the vegetable mass comprises minced vegetables.

3. A method according to claim 1 or 2, wherein an external face of the croquette is covered with a baking liquid, in particular a liquid batter or a dough, after the insertion opening has been closed.

4. A method according to any of the previous claims, wherein the solidified flavor mass is a frozen mass with a temperature of less than 0°C, preferably less than -5°C, more preferably less than -10°C, most preferably less than -15°C.

5. A method according to any of the previous claims, wherein the vegetable mass has a temperature of maximum 10°C, preferably maximum 5°C, more preferably maximum °C, most preferably maximum -5°C, in particular maximum -10°C.

6. A method according to any of the previous claims, wherein the solidified flavor mass has an elongated shape, preferably a cylindrical shape.

7. A method according to any of the previous claims, wherein the croquette has an elongated shape with a length over width ratio of at least 1.

8. A method according to any of the previous claims, wherein an elongated recess is formed in an interior of the croquette for accommodating the flavor mass, in advance of inserting the flavor mass.

9. A method according to any of the previous claims, wherein the flavor mass is positioned substantially central within an interior of the croquette.

10. A method according to any of the previous claims, wherein the flavor mass contains between 1.0 and 5.0 of a thickening agent as a solidification agent, in particular agar or xanthan or a mixture hereof.

11. A method according to any of the previous claims, wherein the flavor mass is a water or fat based sauce, preferably a sauce selected from the group of a meat or poultry derived sauce, a milk based sauce, a vegetable derived sauce, mustard or ketchup, more preferably a smooth meat or poultry derived sauce.

12. A method according to any of the previous claims, wherein the insertion opening along which the solidified flavor product has been inserted, is closed with the vegetable mass of the croquette or with a different vegetable mass.

13. A method according to any of the previous claims, wherein an elongated rope of a thickened flavor mass is inserted into an elongated jejunum of vegetable mass, after which the filled vegetable mass is cut into elongated croquettes of desired dimensions.

14. An edible vegetable croquette, comprising a vegetable mass which surrounds a shaped form of a solidified liquid flavor mass, wherein both opposite ends of the croquette are closed to isolate the solidified liquid flavor mass from the environment.

15. An edible vegetable croquette, wherein the vegetable mass comprises minced vegetables.
